(19) Europäisches Patentamt / European Patent Office / Office européen des brevets

(11) **EP 2 798 955 A1**

(12) **EUROPEAN PATENT APPLICATION**
published in accordance with Art. 153(4) EPC

(43) Date of publication:
**05.11.2014 Bulletin 2014/45**

(51) Int Cl.:
**A01N 59/06** *(2006.01)*     **A01M 17/00** *(2006.01)*
**A01N 61/00** *(2006.01)*     **A01P 3/00** *(2006.01)*

(21) Application number: **12861759.4**

(22) Date of filing: **17.12.2012**

(86) International application number:
**PCT/JP2012/082601**

(87) International publication number:
**WO 2013/099663 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011288008**
              **18.05.2012 JP 2012114289**

(71) Applicant: **Ube Material Industries, Ltd.**
**Ube-shi**
**Yamaguchi 755-8510 (JP)**

(72) Inventors:
• **SAKAI, Shoji**
  **Ube-shi**
  **Yamaguchi 755-8510 (JP)**
• **ITO, Shinichi**
  **Yamaguchi-shi**
  **Yamaguchi 753-8511 (JP)**

(74) Representative: **Grünecker, Kinkeldey,**
**Stockmair & Schwanhäusser**
**Leopoldstrasse 4**
**80802 München (DE)**

(54) **PLANT DISEASE CONTROLLING AGENT AND METHOD FOR CONTROLLING PLANT DISEASES USING SAME**

(57) To provide a plant disease controlling agent and the method for controlling plant diseases using the same, the plant disease controlling agent being commonly applicable to various crop and soil conditions, and ensures safety over a long period throughout the environment.

Provided is a plant disease controlling agent including magnesium oxide obtained by baking magnesium hydroxide at 400 to 1000°C. Further, provided is a method for controlling plant diseases using the plant disease controlling agent. The method is preferably any of mixing the plant disease controlling agent with the surface soil, mixing the plant disease controlling agent with the nursery soil, treating foliage with an aqueous suspension of the plant disease controlling agent, immersing plant roots in the plant disease controlling agent, and irrigating plant feet with the plant disease controlling agent.

EP 2 798 955 A1

**Description**

Technical Field

The present invention relates to a plant disease controlling agent and the method for controlling plant diseases using the same, the plant disease controlling agent being commonly applicable to various crop and soil conditions, and ensures safety over a long period throughout the environment.

Background Art

Diseases are caused when a pathogen or the like contacts with a disease-susceptible plant, and grows therein. More specifically, diseases break out through the following three steps: 1) presence of a pathogen or the like, 2) contact of the pathogen or the like with a plant, and 3) growth of the pathogen. Accordingly, the development of the disease can be suppressed and controlled by inhibiting at least one of these three factors.

Known methods for suppressing and controlling diseases include chemical and biological controlling methods based on cultural controlling methods. Examples of the cultural controlling method include the use of disease-resistant strains, the use of health seedlings, correction of the soil pH, crop rotation, adjustment of the cropping season, drain management, and application of organics. Examples of the chemical controlling method include disinfection of seedlings, and spraying of a disease controlling agent over foliage. Examples of the biological controlling method include the use of antagonistic microorganisms and attenuated viruses.

Cultural controlling methods contribute to the reduction of the onset of diseases and symptoms, but cannot ensure the maintenance of normal growth of the plant. Treatment with an antifungal chemical agent is an effective method for complementing cultural controlling methods. However, it is not easy for ensuring safety of the agent to humans, animals, and environments, and certification of the safety requires enormous efforts and cost. In addition, agents which induce disease resistance intrinsic to plants are used. However, when the agents are chemical substances which are not present in nature, in the same manner as the above-described antifungal agent, they require enormous efforts and cost necessary for ensuring safety to humans, animals, and environments.

There are various diseases such as soilborne and airborne ones. For example, in a soilborne disease (hereinafter may be referred to as soil disease), it is known that a bacterium or filamentous fungi living in soil and having plant pathogenicity infects a crop from its roots, and migrates in the plant body and grows therein, so that the crop cannot grow normally, and wilt and die in serious cases. Soil is composed of mineral inorganic substances formed by weathering of rock-forming minerals, organic substances composed of decomposed product humus of animal and plant remains, and organisms composed mainly of microorganisms. Therefore, even if an antifungal synthetic organic compound is applied to the soil for controlling the plant pathogens causing diseases, it can be decomposed by soil microorganisms, or adsorbed to and fixed on soil clay minerals and soil organics, so the compound will lose one half of its initial effectiveness.

In addition, of the soil disease controlling methods, the chemical disease controlling method including soil fumigation with a gas or liquid having a high vapor pressure requires covering of the treated soil with a sheet due to volatility and toxicity of the active ingredients. Therefore, enormous efforts and the cost of covering materials are necessary, and safety to humans and the environment is not so high. In addition, various methods for replacing and complementing the chemical disease controlling method are developed. Examples of the methods include physical disease control such as solar heat, water vapor disinfection, and reduction disinfection (Patent Literature 1), cultural disease control such as the use of the above-described resistant varieties and resistant rootstock, and the introduction of crop rotation, and biological disease control such as the use of antagonistic microorganisms, and attenuated viruses.

Furthermore, bacteria and filamentous fungi having plant pathogenicity may infect plants not only from the soil as described above, but also from the foliage of crops. For example, infection with tomato gray mold is caused by conidia of a filamentous fungus which fly in the air to adhere to the crop surfaces such as foliage.

Citation List

Patent Literature

Patent Literature 1: Japanese Patent No. 4436426

Summary of Invention

Technical Problem

However, the method described in Patent Literature 1 is not commonly applicable to various crop and soil conditions, and must be adapted to individual conditions.

Furthermore, the agents used for treating crops and soil are exposed to natural actions such as sunlight, rainfall, and temperature changes, so that they can be absorbed or reside in crops, adsorbed to or reside in the soil, volatilized in air, or migrate into groundwater and river water with the permeation of water. Accordingly, safety must be ensured throughout the environment by careful validation over a long period.

Furthermore, a plant disease controlling agent and a method for controlling plant diseases using the same which are effective for the above-described soil diseases and a wide range of plant diseases are demanded.

Accordingly, the present invention is intended to provide a plant disease controlling agent and the method for controlling plant diseases using the same, the plant disease controlling agent being commonly applicable to various crop and soil conditions, and ensures safety over a long period throughout the environment.

Solution to Problem

In order to achieve the above objects, the inventors carried out dedicated researches, and have found that functionalization of magnesium oxide and its use in appropriate scenes allow its common use for various crops and soil conditions, while ensuring safety over a long period. More specifically, the present invention relates to a plant disease controlling agent including magnesium oxide obtained by baking magnesium hydroxide at 400 to 1000°C. The present invention also relates to a plant disease controlling agent including magnesium oxide generating radical species, and a method for controlling plant diseases using the plant disease controlling agent.

Advantageous Effects of Invention

As described above, according to the present invention, a plant disease controlling agent and the method for controlling plant diseases using the same are provided, the plant disease controlling agent being commonly applicable to various crop and soil conditions, and ensures safety over a long period throughout the environment.

More specifically, according to the present invention, plant diseases which are hard to be controlled can be suppressed by a highly free treatment method (mixing with soil, mixing with nursery soil, treatment of foliage, immersion of plant roots, or irrigation of plant feet) which is markedly safe to the environment.

Description of Embodiments

The plant disease controlling agent according to the present invention includes magnesium oxide. Since magnesium oxide has low water solubility, it keeps its plant disease controlling effect. In addition, magnesium oxide mixed with the soil is a magnesium component which is a medium volume nutrient essential for the growth of crops, and is an inorganic compound having low water solubility. Therefore, magnesium oxide hardly moves out from the soil system, and is a markedly safe compound from the viewpoint of environmental behavior.

The magnesium oxide used in the present invention is preferably obtained by baking magnesium hydroxide at 400 to 1000°C for 5 to 90 minutes, preferably 10 to 60 minutes in ordinary air, and other baking conditions are not particularly limited.

Many methods for synthesizing magnesium oxide are known (see "Catalyst, Vol. 46(1), p.36-, (2004)"), and, for example, synthesis by baking of magnesium hydroxide is known. In addition, magnesium carbonate can be used in the same manner as magnesium hydroxide. However, magnesium oxide formed by baking of magnesium carbonate has drawbacks that it has a complicated crystal orientation, and forms carbon dioxide which presents a problem of greenhouse effect gas. For other points, it is not a good plant disease controlling agent because of the following reasons : 1) the components other than magnesium oxide are present as by-products in magnesium oxide at high proportions, so that the expected function of magnesium oxide deteriorates; 2) the formation of the oxygen-deficient structure of magnesium oxide, which is the major cause of the function of the present invention, is low; and 3) the raw material itself and its synthetic method are not low-cost.

The magnesium hydroxide used as a raw material in the present invention may be a magnesium hydroxide-containing compound which contains 80% or more of $Mg(OH)_2$ as a main component. The magnesium hydroxide-containing compound may contain 2% or less of $SiO_2$, $Al_2O_3$, $CaO$, $Fe_2O_3$ or $B_2O_3$ (all expressed as oxide), and the particle size is preferably 1 mm or less, and not specified otherwise.

The magnesium oxide obtained by such magnesium hydroxide shows marked effect of controlling plant diseases. This is due to that the magnesium oxide obtained by baking the magnesium hydroxide at 400 to 1000°C catalyzes the formation of a radical species such as an active oxygen species (for example, $O_2^-$). The active oxygen species thus formed directly or indirectly acts on plant diseases, and thus likely shows marked plant disease controlling effect. The baked magnesium oxide used in the present invention may be referred to as "calcined magnesium oxide".

Of the above-described methods, indirect disease control includes the mechanism of induction of resistance intrinsic to the plant against diseases by calcined magnesium oxide. This mechanism is described below in detail.

The disease resistance of a plant is induced by infection with a disease, and radical species is likely concerned with this action. For example, when a pathogen elicitor binds with a receptor on the surface of a plant cell, after activation of NADPH oxidase, expression of a disease-resistant gene is induced by salicylic acid or jasmonic acid as a signal transducer. In this cascade, radical species are considered to be one of factors for inducing the expression of resistant genes.

Various resistant genes are known, and examples thereof include acidic chitinase, acidic glucanase, basic chitinase, basic glucanase, and phenylalanine ammonia-lyase-4. The amount of expression of these resistant genes can be measured by the real time RT-PCR method using a gene-specific primer.

Calcined magnesium oxide deprotonates a compound as a solid base catalyst, and forms a radical species such as an active oxygen species. As described above, a radical species induces the expression of resistant genes, so that the application of calcined magnesium oxide likely induces the expression of resistant genes to suppress and control diseases. The action of deprotonation of calcined magnesium oxide likely becomes stronger as the basicity and basic strength of calcined magnesium oxide increase, so that the calcined magnesium oxide preferably has high basicity and basic strength. The higher the basicity and basic strength of magnesium oxide, the stronger its deprotonation action, and more radical species are formed, which likely results in the high expression of disease-resistant genes of plants.

In addition, the integral intensity of the crystal face (111) of the particle surface and the specific surface area by the BET method are used as major indexes for the deprotonation action of calcined magnesium oxide. The crystal face (111) is characteristic crystal face of a solid basic catalyst, and shows the presence of surface oxygen atoms having a low degree of coordination. The higher the integral intensity of the crystal face (111), the higher the abundance ratio of surface oxygen atoms having a low degree of coordination and the higher the basic strength, and thus likely the stronger the deprotonation action. In addition, the higher the value of the BET specific surface area, the larger the crystal surface area, and thus likely the stronger the deprotonation action. Specifically, the BET specific surface area is preferably from 100 to 400 $m^2$/g. In addition, the relative integral intensity expressed by the integral intensity of the crystal face (111) for the total peaks in X-ray diffraction of magnesium oxide is preferably 5% or more. Refer to "Catalyst, Vol. 46(1), p. 36-, (2004)" for details about the basicity of calcined magnesium oxide and generation of radical species.

In addition, the present invention preferably further includes humic acid. The humic acid herein means a neutralized salt of the nitrate decomposition products of lignite or peat, or a humic acid salt which is a main ingredient of commercial products produced as bark compost. The plant disease controlling agent including humic acid according to the present invention shows higher plant disease controlling effect. The reason for this is likely that the polyhydric phenol moiety in humic acid is subjected to alkali autooxidation by calcined magnesium oxide, and that the phenolic hydroxyl group in humic acid is deprotonated by the action of calcined magnesium oxide which is a solid basic catalyst to promote the generation of radical species. Therefore, the combination of calcined magnesium oxide and humic acid likely allow higher expression of the resistant gene to increase the disease controlling effect in comparison with the single use of calcined magnesium oxide. In the plant disease controlling agent according to the present invention, the humic acid content is preferably from 20 to 200 parts by mass, and more preferably from 5 to 40 parts by mass for 100 parts by mass of calcined magnesium oxide. The humic acid may be a liquid.

Furthermore, in the present invention, additives such as quartz for preventing dusting may be added without impairing the advantageous effect of the present invention.

The method for controlling plant diseases according to the present invention is a method for controlling plant diseases using the above-described plant disease controlling agent. In the method for controlling plant diseases according to the present invention, the plant diseases to be treated include soil diseases and a wide range of diseases, such as the diseases listed in Table 1.

[Table 1]

| Plant | Diseases |
|---|---|
| Cucurbitaceae | Fusarium wilt, damping-off, Verticillium wilt |
| Cucumber | Powdered mildew, anthrax, mildew |
| Tomato | Bacterial wilt, wilt disease, bacterial canker, gray mold |
| Cruciferae | Clubroot, black rot |
| Strawberry | Chlorosis, wilt disease |
| Spinach | Damping-off, root rot |
| Chinese radish | Chlorosis, Clubroot |

(continued)

| Plant | Diseases |
|---|---|
| Carrot | Soft rot, root rot |
| Potato | Rhizoctonia solani, common scab, blight, anthrax |
| Onion | Damping-off, pink root rot |
| Rice | Pyricularia oryzae, Gibberella fujikuroi, Pseudomonas plantarii |
| Wheat | Fusarium head blight, snow mold |
| Soybean | Damping-off |

The method for applying the plant disease controlling agent is preferably mixing of the plant disease controlling agent with the surface soil or the nursery soil. The amount of the application of the plant disease controlling agent by seeding or mixing with the surface soil before planting is preferably from 10 to 250 kg, and more preferably from 30 to 130 kg per 10 a. When a large amount is applied, the soil pH may fall in an unpreferable range. When the plant disease controlling agent is mixed with the surface soil in an amount of 10 to 250 kg per 10 a, the disease suppression effect of at 10 to 80% is expected.

In addition, as a method for applying the plant disease controlling agent, mixing of the plant disease controlling agent with the nursery soil before seeding at a concentration of 0.01 to 0.5% by weight, and transplanting it to the main field contaminated with a pathogen will achieve disease suppression effect, and a disease suppression rate of 20 to 70% will be achieved.

Furthermore, disease suppression effect can be expected when treating foliage with the plant disease controlling agent. Examples of the method for treating foliage with the plant disease controlling agent include application of an aqueous suspension of the plant disease controlling agent to foliage and immersion of foliage in the aqueous suspension. For example, a disease suppression rate of 30 to 80% is achieved when an adequate amount of a 0.01 to 2.0%, preferably 0.01 to 1.0% aqueous suspension (W/V) of the plant disease controlling agent is sprayed over the foliage of seedlings grown in culture soil using a spreader or the like so as to appropriately wet the foliage, and then the seedlings are transplanted to a main field contaminated with a pathogen.

In addition, the application method including immersing plant roots in the plant disease controlling agent is also effective. The application method including immersion of plant roots is achieved by, for example, immersing plant roots of seedlings in a 0.01 to 1.0% aqueous suspension of calcined magnesium oxide for 1 to 60 seconds.

Furthermore, the application method including irrigating plant feet with the plant disease controlling agent is also effective. The application method including irrigation of plant feet is achieved by, injecting a 0.01 to 1.0% aqueous suspension of calcined magnesium oxide in the soil around rhizosphere soil in the amount of 0.03 to 0.3 L for 1 kg of soil.

Examples

The present invention is specifically described below on the basis of examples, but these examples will not limit the object of the present invention.

<Experiment 1: Effect of mixing with soil for tomato wilt>

(Example 1)

The plant disease controlling agent used herein was calcined magnesium oxide (hereinafter referred to as MgO-1) obtained by baking magnesium hydroxide (UD-650: Ube Material Industries, Ltd.) having the chemical composition shown in Table 2 at 800°C for 10 minutes using an external heating rotary kiln. MgO-1 had the chemical composition shown in Table 3.

[Table 2]

| Chemical composition (%) | MgO | 64.8 |
|---|---|---|
| | CaO | 0.62 |
| | $SiO_2$ | 0.10 |
| | $Fe_2O_3$ | 0.02 |
| | $Al_2O_3$ | 0.02 |
| | $B_2O_3$ | 0.21 |
| | Ig-loss | 33.4 |

[Table 3]

| Chemical composition (%) | MgO | 95.8 |
|---|---|---|
| | CaO | 0.54 |
| | $SiO_2$ | 0.13 |
| | $Fe_2O_3$ | 0.05 |
| | $Al_2O_3$ | 0.05 |
| | $B_2O_3$ | 0.02 |
| * Other components are ignition loss. | | |

All over the surface of diluvial sandy soil filled in a container (0.4 m × 0.6 m × depth 0.25 m) was irrigated with bacterial wilt as a soil pathogen, which had been prepared by culturing in a YPGS medium at 28°C for 72 hours under shaking, and then MgO-1 powder was applied in an amount of 120 kg/10 a and mixed with the soil to a depth of 15 cm from the surface, and six plants of tomato (variety; Momotaro 8) were transplanted therein. The container was controlled at room temperature (daytime 27°C, nighttime 20°C). Thereafter, the container was observed visually at regular intervals, and then the incidence rate was calculated by the following formula (1). The test was repeated twice.

$$\text{Incidence rate (\%)} = (\text{number of diseased plants/number of test plants}) \times 100 \quad (1)$$

(Example 2)

The treatment according to Example 2 was provided in the same manner as in Example 1 except that the MgO-1 powder was used in an amount of 240 kg/10 a, and the incidence rate was calculated in the same manner as in Example 1.

(Comparative Example 1)

As a control, the non treatment according to Comparative Example 1 was provided using magnesia lime (Kumiai Carbonate Magnesia lime: manufactured by Yakusen Sekkai Co, Ltd.) in place of the MgO-1 powder in an amount of 150 kg/10 a, and the incidence rate was calculated in the same manner as in Example 1.

The results of Examples 1, 2, and Comparative Example 1 are shown in Table 4. Table 4 indicates that the application of MgO-1 suppressed the development of the disease.

[Table 4]

| Treatment | | (Incidence rate, %) | | | | | |
|---|---|---|---|---|---|---|---|
| | | Cultivation period after planting (day) | | | | | |
| | | 0 | 7 | 14 | 21 | 31 | 38 |
| Example 1 | MgO-1 120Kg/10a | 0.0 | 0.0 | 0.0 | 16.7 | 33.3 | 91.7 |

(continued)

| Treatment | | (Incidence rate, %) | | | | | |
|---|---|---|---|---|---|---|---|
| | | Cultivation period after planting (day) | | | | | |
| | | 0 | 7 | 14 | 21 | 31 | 38 |
| Example 2 | MgO-1 240Kg/10a | 0.0 | 0.0 | 0.0 | 0.0 | 8.3 | 33.3 |
| Comparative Example 1 | Magnesia lime 150Kg/10a | 0.0 | 0.0 | 0.0 | 50.0 | 100.0 | 100.0 |

<Experiment 2: Effect of addition of humic acid on tomato wilt by mixing with soil>

Subsequently, the addition effect of the mixture of MgO-1 powder with humic acid for tomato wilt was tested.

(Example 3)

A treatment according to Example 3 was provided in the same manner as in Example 1, except that the tomato variety was changed to Reika, and the incidence rate was calculated in the same manner as in Example 1.

(Example 4)

Furthermore, a treatment according to Example 4 was provided in the same manner as in Example 3, except that humic acid (KUMIAI AZUMIN: Denka Azumin Kabushiki Kaisha) was used in an amount of 80 kg/10 a, and the incidence rate was calculated in the same manner as in Example 3.

(Comparative Example 2)

As a control, a non treatment according to Comparative Example 2 was provided wherein the magnesia lime applied in Comparative Example 1 was applied in an amount of 150 kg/10 a in place of the MgO-1 powder in an amount of 120 kg/10 a used in Example 4, and the incidence rate was calculated in the same manner as in Example 3.
The results of Examples 3, 4, and Comparative Example 2 are shown in Table 5. Table 5 indicates that the application of MgO-1 and the addition of humic acid suppressed the development of the disease.

[Table 5]

| Treatment | | (Incidence rate, %) | | | | | | |
|---|---|---|---|---|---|---|---|---|
| | | Cultivation period after planting (day) | | | | | | |
| | | 12 | 15 | 18 | 21 | 24 | 27 | 30 |
| Example 3 | MgO-1 120Kg/10a | 0.0 | 20.8 | 37.5 | 58.3 | 58.3 | 58.3 | 70.8 |
| Example 4 | MgO-1 240Kg/10a + humic acid | 0.0 | 11.1 | 16.7 | 44.4 | 44.4 | 61.1 | 61.1 |
| Comparative Example 2 | Magnesia lime 150Kg/10a + humic acid | 0.0 | 41.7 | 83.3 | 91.7 | 91.7 | 91.7 | 91.7 |

<Experiment 3 : Effect on potherb Clubroot by mixing with soil>

(Example 5)

As the plant disease controlling agent, calcined magnesium oxide (hereinafter referred to as MgO-2) obtained by baking the magnesium hydroxide (UD-650: Ube Material Industries, Ltd.) having the chemical composition shown in Table 2 at 750°C for 15 minutes in an external heating rotary kiln. The MgO-2 had the chemical composition shown in Table 6.

[Table 6]

| Chemical composition (%) | MgO | 95.3 |
|---|---|---|
| | CaO | 0.52 |
| | $SiO_2$ | 0.15 |
| | $Fe_2O_3$ | 0.07 |
| | $Al_2O_3$ | 0.05 |
| | $B_2O_3$ | 0.07 |
| * Other components are ignition loss. | | |

The MgO-2 powder was repeatedly mixed three times in an amount of 60 kg/10 a with one section (1 m × 2 m) of the sandy field soil contaminated with a Clubroot bacterium, and potherb was seeded and cultivated for 55 days, and cropped. Gall formation was visually observed, and the incidence rate and severity were calculated. The incidence rate was calculated by the above-described formula (1), and the severity was calculated by the following formula (2), wherein the condition of gall formation was classified into four stages from A (no formation) to D (strongest formation). The disease control rate was calculated by the following formula (3).

$$Severity = (A \times 0 + B \times 10 + C \times 60 + D \times 100)/number\ of\ all\ plants \quad (2)$$

$$Disease\ control\ rate = 1 - (severity\ in\ treatment/severity\ in\ non\ treatment) \quad (3)$$

(Comparative Example 3)

As a control, a non treatment according to Comparative Example 3 was provided using the magnesia lime applied in Comparative Example 1 in an amount of 75 kg/10 a in place of the MgO-2 powder in an amount of 60 kg/10 a, and the incidence rate and severity were calculated in the same manner as in Example 5.

Table 7 shows the results of Example 5 and Comparative Example 3. Table 7 indicates that the application of MgO-2 suppressed the development of the disease.

[Table 7]

| | Number of diseased plants | Incidence rate (%) | Severity | Disease control rate |
|---|---|---|---|---|
| Example 5 | 6.3 | 9.1 | 4.4 | 83.8 |
| Comparative Example 3 | 29.0 | 46.0 | 27.2 | - |

<Experiment 4 : Effect on cabbage Clubroot by mixing with soil>

(Example 6)

One week before planting, the MgO-2 powder was mixed with the soil in an amount of 120 kg/10 a. Twenty day old cabbage seedling after seeding (variety; Shoshu) was planted, cultivated for 78 days, and cropped. Gall formation was visually observed, and the incidence rate and severity were calculated by the above-described formulae (1) and (2). In addition, the disease control rate was calculated by the above-described formula (3). The MgO-2 was the same as that used in Experiment 3, and repeatedly mixed three times with one section (1 m × 2 m) of the sandy field soil contaminated with a Clubroot bacterium.

(Comparative Example 4)

A treatment according to Comparative Example 4 was provided in the same manner as in Example 6, except that a commercial Clubroot controlling agent (NEBIJIN powder: Kumiai Chemical Industry Co., Ltd.) was applied as a plant disease controlling agent in an amount of 20 kg/10 a, and the incidence rate, severity, and disease control rate were calculated in the same manner as in Example 6.

(Comparative Example 5)

As a control, a non treatment according to Comparative Example 5 was provided using the magnesia lime applied in Comparative Example 1 in an amount of 75 kg/10 a in place of the MgO-2 powder in an amount of 120 kg/10 a, and the incidence rate and severity were calculated in the same manner as in Example 6.

Table 8 shows the results of Example 6 and Comparative Examples 4 and 5. Table 8 indicates that the application of MgO-2 suppressed the development of the disease.

[Table 8]

| | Number of diseased plants | Incidence rate (%) | Severity | Disease control rate |
|---|---|---|---|---|
| Example 6 | 4.0 | 25.7 | 12.8 | 73.9 |
| Comparative Example 4 | 7.0 | 45.0 | 24.0 | 51.1 |
| Comparative Example 5 | 11.7 | 73.2 | 49.1 | - |

<Experiment 5: Effect on tomato wilt by mixing with nursery soil>

(Example 7)

MgO-1 was added to the nursery soil in a pot (Yanmer NAPURA fertile soil: Paripuro Co. , Ltd.) in the ratio of 0.2%, tomato (variety; Momotaro 8) was seeded, and grown for 20 days. Six of the seedlings were transplanted. The wilt control test was carried out wherein other conditions were same as those in Example 1, and the incidence rate was calculated in the same manner as in Example 1.

(Comparative Examples 6 and 7)

As controls, a non treatment according to Comparative Example 6 using commercial MgO (UC-95S: Ube Material Industries, Ltd.) and a non treatment according to Comparative Example 7 untreated with the plant disease controlling agent were provided, and the incidence rate was calculated in the same manner as in Example 7.

Table 9 shows the results of Example 7 and Comparative Examples 6 and 7. Table 9 indicates that the application of MgO-1 suppressed the development of the disease.

[Table 9]

| | | (Incidence rate, %) | | | | | |
|---|---|---|---|---|---|---|---|
| Treatment | | Cultivation period after planting (day) | | | | | |
| | | 19 | 22 | 29 | 36 | 45 | 51 |
| Example 7 | Nursery soil treated with MgO-1 | 0.0 | 33.3 | 33.3 | 66.7 | 83.3 | 100.0 |
| Comparative Example 6 | Nursery soil treated with commercial MgO | 0.0 | 33.3 | 50.0 | 83.3 | 100.0 | 100.0 |
| Comparative Example 7 | Untreated | 0.0 | 50.0 | 50.0 | 83.3 | 100.0 | 100.0 |

<Experiment 6: Effect on tomato wilting by mixing with nursery soil>

(Example 8)

Tomato (variety; FukujuNo. 2) seedlings at three leaves stage were planted in the nursery soil mixed with 0.1% of MgO-2 (mixture of pearlite and vermiculite), three days later, the roots were irrigated with a suspension of spores of tomato wilting (Fusarium oxysporum f.sp. lycopersici Fox. 37) ($1 \times 10^7$/ml), and the seedlings were cultivated for two weeks under artificial illumination at 25°C. The diseased plant was observed, the rate of wilted leaves (%) was calculated by the following formula (4).

$$\text{Rate of wilted leaves (\%) = (number of wilted}$$
$$\text{leaves/number of all leaves)} \times 100 \qquad (4)$$

(Comparative Examples 8 and 9)

As controls, non treatments according to Comparative Example 8 using commercial MgO (UC-95S: Ube Material Industries, Ltd.) and Comparative Example 9 using no plant disease controlling agent were provided, and the rate of wilted leaves (%) was calculated in the same manner as in Example 8.

Table 10 shows the results of Example 8 and Comparative Examples 8 and 9. Table 10 indicates that the application of MgO-2 suppressed the development of the disease.

[Table 10]

| Treatment | | Rate of wilted leaves (%) |
|---|---|---|
| Example 8 | Soil treated with MgO-2 | 18 |
| Comparative Example 8 | Soil treated with commercial MgO-2 | 30 |
| Comparative Example 9 | Untreated | 32 |

<Experiment 7: Effect on tomato wilt by leaf surface treatment>

(Example 9)

A 1.0% aqueous suspension (W/V) of MgO-1 was applied to the foliage of tomato (variety; Momotaro 8) seedlings of the five to six leaves stage in an amount of 8 ml/plant, and the same bacterial wilt as that used in Example 1 was inoculated in the soil. The other tests were same as those in Example 1, and the incidence rate was calculated from the plants confirmed to be diseased by observation.

(Comparative Examples 10 and 11)

As controls, non treatments according to Comparative Example 10 using commercial MgO (UC-95S: Ube Material Industries, Ltd.) and Comparative Example 11 using no plant disease controlling agent were provided, and the incidence rate (%) was calculated in the same manner as in Example 9.

Table 11 shows the results of Example 9 and Comparative Examples 10 and 11. Table 11 indicates that the application of MgO-1 suppressed the development of the disease.

[Table 11]

| Treatment | | (Incidence rate, %) | | | | | |
|---|---|---|---|---|---|---|---|
| | | Cultivation period after planting (day) | | | | | |
| | | 19 | 22 | 29 | 36 | 45 | 51 |
| Example 9 | Spraying of MgO-1 over foliage | 0.0 | 16.7 | 16.7 | 16.7 | 16.7 | 16.7 |
| Comparative Example 10 | Spraying of commercial MgO over foliage | 0.0 | 33.3 | 50.0 | 50.0 | 100.0 | 100.0 |
| Comparative Example 11 | Untreated | 0.0 | 50.0 | 50.0 | 83.3 | 100.0 | 100.0 |

<Experiment 8: Effect on tomato wilting by leaf surface treatment>

(Example 10)

The second leaves of tomato (variety; Fukuju No. 2) seedlings in the three leaves stage were immersed in a 1.0% aqueous suspension (W/V) of MgO-2 for several minutes, 3 days later the plant roots were irrigated with a spore suspension ($1 \times 10^7$/ml) of tomato wilting (Fusarium oxysporum f.sp. lycopersici Fox. 37), and the plants were cultivated in the culture soil (mixture of pearlite and vermiculite) for 2 weeks at 25°C under artificial illumination. The rate of wilted leaves (%) was calculated from the plants confirmed to be diseased by observation using the above-described formula (4).

(Comparative Examples 12 and 13)

As controls, non treatments according to Comparative Example 12 using commercial MgO (UC-95S: Ube Material Industries, Ltd.) and Comparative Example 13 using no plant disease controlling agent were provided, and the rate of wilted leaves (%) was calculated in the same manner as in Example 10.
Table 12 shows the results of Example 10 and Comparative Examples 12 and 13. Table 12 indicates that the application of MgO-2 suppressed the development of the disease.

[Table 12]

| Treatment | | Rate of wilted leaves (%) |
|---|---|---|
| Example 10 | Immersion of foliage in MgO-2 | 5 |
| Comparative Example 12 | Immersion of foliage in commercial MgO | 65 |
| Comparative Example 13 | Untreated | 71 |

<Experiment 9: Measurement of tomato resistant gene expressed by plant root treatment with calcined magnesium oxide>

(Example 11)

As the plant disease controlling agent, calcined magnesium oxide (hereinafter referred to as MgO-3) obtained by baking the magnesium hydroxide (UD-650: Ube Material Industries, Ltd.) having the chemical composition shown in Table 2 using an external heating rotary kiln at 750°C for 20 minutes was used. MgO-3 had the physicochemical properties shown in Table 13. The relative integral intensity expressed in the integral intensity of the crystal face (111) for all the peaks was measured using a powder x-ray diffraction apparatus (RINT-2500HF, Rigaku Corporation), and determined by calculating the peak area by an analysis soft (Jade). The BET specific surf ace area was measured using a fully automated volumetric gas adsorption station (Autosorb-1MP, Quantachrome) based on the BET multi-point method. For reference, the physicochemical properties of MgO-1, MgO-2, and commercial MgO (UC-95S: Ube Material Industries, Ltd.) are also shown.

[Table 13]

| Sample name | Chemical composition (%) | | | | | | | Crystal face (111) relative integral intensity (%) | Specific surface area BET ($m^2$/g) |
|---|---|---|---|---|---|---|---|---|---|
| | MgO | CaO | $SiO_2$ | $Fe_2O_3$ | $Al_2O_3$ | $B_2O_3$ | Ig-loss | | |
| MgO-1 | 95.8 | 0.54 | 0.13 | 0.05 | 0.05 | 0.02 | 2.2 | 12 | 295 |
| MgO-2 | 95.3 | 0.52 | 0.15 | 0.07 | 0.05 | 0.07 | 2.5 | 16 | 320 |
| MgO-3 | 89.1 | 0.48 | 0.11 | 0.03 | 0.03 | 0.08 | 8.8 | 15 | 314 |
| Commercial MgO | 96.6 | 0.55 | 0.12 | 0.04 | 0.03 | 0.10 | 1.2 | 0 | 9 |

The results in Table 13 indicate that MgO-3 has a higher relative integral intensity of the crystal face (111) and a larger BET specific surface area in comparison with commercial MgO. These facts suggest that MgO-3 has an abundance ratio of surface oxygen atoms having a low degree of coordination which are characteristic to the crystal face (111) as a solid basic catalyst, and thus likely exhibits a high basicity. In addition, since MgO-3 shows such high basicity, it promotes the generation of radical species, and thus likely induces the expression of the resistant gene of a plant to suppress the development of plant diseases as will be described later.

Tomato seeds (variety; Large Fukuju) were spread in a petri dish, and germinated at 25°C in one week. The germinated seedlings were planted in nursery soil (mixture of pearlite and vermiculite) containing 0.25% (W/W) of MgO-3 powder, and cultivated in a glass greenhouse (temperature 25°C) for 4 weeks (Example 11). In addition, as a control, the above-described tomato seedling was cultivated without adding calcined magnesium oxide (Comparative Example 14).

The seedlings obtained in Example 11 and Comparative Example 14 were individually cut into stems and leaves, and frozen with liquid nitrogen. The RNA was extracted, subjected to quantitative real time RT-PCR using a gene-specific primer, and the expression amounts of the resistant genes were measured. The targeted resistant genes were acidic chitinase (acidic CHI: NCBI Z15141), acidic glucanase (acidic Glu: NCBI M80604), basic chitinase (basic CHI: NCBI Z15140), basic glucanase (basic Glu: NCBI M80608), and phenylalanine ammonia-lyase -4 (PAL-4: TIGR TC153699). "Primer Express" (Applied Biosystems) was used as the gene-specific primer, and RT-PCR was carried out 40 cycles at 95°C for 15 second and at 58°C for 60 seconds. The expression amounts of the resistant genes were expressed as relative values, with the value of the control (Comparative Example 14) set as 1. The internal standard of the resistant gene measurement was actin. The results are shown in Table 14.

[Table 14]

| | Stem | | | | | Leaf | | | | |
|---|---|---|---|---|---|---|---|---|---|---|
| | Acidic CHI | Acidic Glu | Basic CHI | Basic Glu | PAL-4 | Acidic CHI | Acidic Glu | Basic CHI | Basic Glu | PAL-4 |
| Example 11 | 150 | 50 | 3 | 14 | 3800 | 4 | 6 | 5 | 10 | 6 |
| Comparative Example 14 | 1 | 1 | 1 | 1 | 1 | 1 | 1 | 1 | 1 | 1 |

As is evident from the results in Table 14, in Example 11, expression of five resistant genes was found in both of the stems and leaves. In particular, acidic chitinase and phenylalanine ammonia-lyase-4 were strongly expressed in the stems. These facts indicate that MgO-3 highly induces the expression of resistant genes, and thus likely contributes to the control of development of diseases.

<Experiment 10: Measurement of tomato resistant genes expressed by foliage treatment with calcined magnesium oxide>

(Example 12)

Tomato (variety; Momotaro) was seeded under the same conditions as in Example 11, and the second leaves of the seedlings in the three leaves stage were immersed in a 1% aqueous suspension (W/V) of MgO-3 for several seconds. After a lapse of three days from the treatment, the foliage was collected, and the expression amounts of resistant genes were measured in the same manner as in Example 11 (Example 12). The targeted resistant genes were two: acidic chitinase (acidic CHI) and acidic glucanase (acidic Glu). As controls, an aqueous suspension containing commercial MgO (UC-95S: Ube Material Industries, Ltd.) in place of MgO-3 (Comparative Example 15) and MgO-free water adjusted to pH 11 (Comparative Example 16) were used. The expression amounts of the resistant genes were expressed as relative values, with the value of the control (Comparative Example 16) set as 1. The results are shown in Table 15.

[Table 15]

| | Leaf | |
|---|---|---|
| | Acidic CHI | Acidic Glu |
| Example 12 | 4 | 12 |
| Comparative Example 15 | 1 | 2 |
| Comparative Example 16 | 1 | 1 |

As is evident from the results in Table 15, in Example 12, expression of the above-described two resistant genes was found. This fact indicates that MgO-3 in foliage treatment highly induces the expression of the resistant genes, and thus likely contributes to the control of development of diseases.

<Experiment 11: Disease suppression effect on tomato gray mold by spraying over foliage; pot cultivation>

(Example 13)

Tomato (variety; Momotaro) was grown under the same conditions as in Example 12, and the second leaves of the seedlings in the three leaves stage were immersed in a 1% aqueous suspension (W/V) of MgO-3 for several seconds. After a lapse of 3 days from the treatment, tomato roots were immersed in a spore solution of Fusarium oxysporum f.sp. lycopersici Fox.37 ($1 \times 10^7$/ml) for several seconds for inoculation, and then planted in the nursery soil (vermiculite). The disease symptom was observed by visual observation 17 days after inoculation, and the severity was examined (Example 13). As a control, water adjusted to pH 11 was used in place of the above-described aqueous suspension of MgO-3 (Comparative Example 17). The results are shown in Table 16. The severity was rated based on the following criteria.

<Severity>

0: No disease symptom.
1: Slight thickening and curvature of the hypertrophy were found.
2: One or two points of browning were found in the vascular bundles in hypocotyl.
3: At least two points of browning and growth failure (strong curvature of stem and dissymmetry growth) were found.
4: All vascular bundles were browned, death of entire plant, and small plant with wilt were found.

[Table 16]

| Treatment | Severity |
| --- | --- |
| Example 13 (1% aqueous suspension) | 2 |
| Comparative Example 17 (pH 11 water) | 4 |

As is evident from the results in Table 16, the severity was limited low in Example 13 wherein MgO-3 was sprayed on foliage.

<Experiment 12: Disease suppression effect on tomato gray mold by spraying over foliage; field test>

(Example 14)

In a test field in a greenhouse (diluvial sandy soil), tomato seedlings (rootstock; B Barrier, scion; Momotaro) were planted in one section of 1.2 m $\times$ 0.9 m. Diseased leaves having tomato gray mold as the infection source were suspended, and the seedlings were infected therewith by air infection. During the cultivation period for 4 months, a 1000-fold aqueous suspension of MgO-3 was sprayed four times, and the disease condition was examined by visual observation (Example 14). In the non treatment, of the four times of spraying, trihumin wettable powder was used for the first and second spraying, Bellkute wettable powder was used for the third spraying, and Amista Flowable was used for the fourth spraying in a prior art manner (Comparative Example 18). In addition, an untreated section using no MgO-3 or agent was provided (Comparative Example 19). The results are shown in Table 17. The indices in the table were constructed by the following method.

Rate of diseased leaf: calculated from the incidence rate of upper ten leaves in the third stage above inflorescence.

Severity: calculated from the disease index criterion of the test leaves.

```
Disease control rate: (1 - (severity in
treatment/severity in untreated section)) × 100
```

[Table 17]

| Treatment | Rate of diseased leaves (%) | Severity | Disease control rate |
|---|---|---|---|
| Example 14 | 36.7 | 12.5 | 61.6 |
| Comparative Example 18 (control) | 9.2 | 2.3 | 93.0 |
| Comparative Example 19 (untreated) | 59.7 | 32.5 | - |

As is evident from the results in Table 17, in Example 14 wherein MgO-3 was sprayed over foliage, the severity was low even when tomato gray mold was inoculated by air infection. In addition, Examples 13 and 14 indicate that the spraying of MgO-3 over foliage achieves disease suppression effect of up to 62%.

<Experiment 13: Effect of humic acid on tomato wilt by spraying over foliage; pot test>

(Example 15)

A solution containing 1% MgO-1 and 0.1% humic acid was sprayed over the foliage of the tomato grown in the same manner as in Example 7 (Mofumin liquid: purchased from Artray Co., Ltd.). As a control, treatments treated with a 1% MgO-1 suspension (Example 16), a 0.1% humic acid solution (Mofumin liquid: purchased from Artray Co. , Ltd.) (Comparative Example 20), and untreated (Comparative Example 21) were provided. Six pots each of these plants were placed in a 1 liter container filled with tap water, and bacterial wilt, which had been prepared in the same manner as in Example 1, was added in an amount of $10^8$ cfu/ml four days after the spraying. Thereafter, the pots were stored in a glass greenhouse (daytime 27°C, nighttime 20°C), visually observed at regular intervals, and the incidence rate was calculated by the above-described formula (1). The results are shown in Table 18.

[Table 18]

| Treatment | Cultivation period after planting (day) | | |
|---|---|---|---|
| | 6 | 11 | 17 |
| Example 15 | 0 | 30 | 60 |
| Example 16 (MgO-1) | 0 | 50 | 90 |
| Comparative Example 20 (Mofumin) | 10 | 70 | 100 |
| Comparative Example 21 (untreated) | 40 | 100 | 100 |

As is evident from the results in Table 18, in comparison with untreated section (Comparative Example 21), MgO-1 alone (Example 16) suppressed the development of the disease, and the addition of a 0.1% Mofumin liquid further increased the effect (Example 15). Slight disease suppression effect was observed when the Mofumin liquid was used alone (Comparative Example 20).

## Claims

1. A plant disease controlling agent comprising magnesium oxide obtained by baking magnesium hydroxide at 400 to 1000 °C.

2. The plant disease controlling agent according to claim 1, which comprises humic acid.

3. The plant disease controlling agent according to claim 2, wherein the content of the humic acid is from 20 to 200 parts by mass with reference to 100 parts by mass of magnesium oxide.

4. The plant disease controlling agent according to claim 2 or 3, wherein the humic acid is a neutralized salt of a nitric acid decomposition product of lignite or peat, or a humic acid salt contained in bark compost.

5. The plant disease controlling agent according to any of claims 1 to 4, which is an aqueous suspension of the magnesium oxide.

6. A plant disease controlling agent comprising magnesium oxide generating a radical species.

7. A method for controlling plant diseases using the plant disease controlling agent according to any of claims 1 to 6.

8. The method for controlling plant diseases according to claim 7, which comprises mixing the plant disease controlling agent with the surface soil.

9. The method for controlling plant diseases according to claim 7, which comprises mixing the plant disease controlling agent with the nursery soil.

10. The method for controlling plant diseases according to claim 7, which comprises treating foliage with the plant disease controlling agent.

11. The method for controlling plant diseases according to claim 7, which comprises immersing plant roots in the plant disease controlling agent.

12. The method for controlling plant diseases according to claim 7, which comprises irrigating plant feet with the plant disease controlling agent.

## INTERNATIONAL SEARCH REPORT

| | International application No. |
|---|---|
| | PCT/JP2012/082601 |

A. CLASSIFICATION OF SUBJECT MATTER
*A01N59/06*(2006.01)i, *A01M17/00*(2006.01)i, *A01N61/00*(2006.01)i, *A01P3/00* (2006.01)i

According to International Patent Classification (IPC) or to both national classification and IPC

B. FIELDS SEARCHED

Minimum documentation searched (classification system followed by classification symbols)
A01N59/06, A01M17/00, A01N61/00, A01P3/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)
CA/BIOSIS/WPIDS(STN), JSTPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X | WO 2010/032765 A1 (Kitakyushu Foundation for the Advancement of Industry, Science and Technology), 25 March 2010 (25.03.2010), entire text; particularly, claims & EP 2327307 A1 & US 2011/0212185 A1 & CA 2737227 A1 & CN 102159082 A | 6–12 |
| Y | JP 61-233606 A (The Institute of Physical and Chemical Research), 17 October 1986 (17.10.1986), entire text; particularly, claims (Family: none) | 1–5 |

| ☒ | Further documents are listed in the continuation of Box C. | ☐ See patent family annex. |
|---|---|---|

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 01 March, 2013 (01.03.13) | 19 March, 2013 (19.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 798 955 A1

**INTERNATIONAL SEARCH REPORT**

International application No.

PCT/JP2012/082601

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 57-131708 A  (The Institute of Physical and Chemical Research), 14 August 1982 (14.08.1982), entire text; particularly, claims (Family: none) | 1-5 |
| Y | Kagaku Daijiten 3, Kyoritsu Shuppan Co., Ltd., 30 September 1960 (30.09.1960), page 940, paragraph of "Sanka Magnesium" | 1-5 |
| Y | JP 10-109913 A  (Idemitsu Kosan Co., Ltd.), 28 April 1998 (28.04.1998), claims; paragraph [0036] (Family: none) | 2-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4436426 B

**Non-patent literature cited in the description**

• *Catalyst,* 2004, vol. 46 (1), 36